**Europäisches Patentamt**

**European Patent Office**

**Office européen des brevets**

(19)

(11) Veröffentlichungsnummer : **0 377 609 B1**

(12) # EUROPÄISCHE PATENTSCHRIFT

(45) Veröffentlichungstag der Patentschrift :
**03.06.92 Patentblatt 92/23**

(51) Int. Cl.$^5$ : **F04D 25/02, F16H 1/22**

(21) Anmeldenummer : **88907315.1**

(22) Anmeldetag : **31.08.88**

(86) Internationale Anmeldenummer :
**PCT/EP88/00780**

(87) Internationale Veröffentlichungsnummer :
**WO 89/02535 23.03.89 Gazette 89/07**

(54) **MECHANISCHER ANTRIEB EINES LADEGEBLÄSES EINER BRENNKRAFTMASCHINE.**

(30) Priorität : **05.09.87 DE 3729889**

(43) Veröffentlichungstag der Anmeldung :
**18.07.90 Patentblatt 90/29**

(45) Bekanntmachung des Hinweises auf die
Patenterteilung :
**03.06.92 Patentblatt 92/23**

(84) Benannte Vertragsstaaten :
**DE FR GB IT NL SE**

(56) Entgegenhaltungen :
**BE-A- 449 655**
**CH-A- 413 986**
**DE-A- 1 503 499**
**DE-C- 582 797**

(56) Entgegenhaltungen :
**FR-A- 1 005 218**
**FR-A- 2 410 187**
**FR-A- 2 580 723**
**US-A- 3 174 352**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **WINKELMANN, Siegfried**
**Birkensteige 15**
**W-7992 Tettnang (DE)**
Erfinder : **SCHLICHTIG, Karl**
**Virchowstra e 20**
**W-7990 Friedrichshafen (DE)**
Erfinder : **BREISCH, Harald**
**Brühlstra e 10**
**W-7993 Kressbronn (DE)**

EP 0 377 609 B1

## Beschreibung

Die Erfindung bezieht sich auf einen mechanischen Antrieb eines Ladegebläses einer Brennkraftmaschine, wobei von der Brennkraftmaschine aus über ein als Planetengetriebe ausgebildetes Übersetzungsgetriebe und eine Rotorwelle ein in einem Ladergehäuse angeordneter Rotor antreibbar ist.

Bei einem gattungsgemäßen Antrieb eines Ladegebläses (DE-PS 582 797) sind als getrennte Baueinheiten eine mit der Kurbelwelle der Brennkraftmaschine verbundene Schaltkupplung mit einem Übersetzungsgetriebe in Form eines Planetengetriebes sowie ein Ladegebläse vorgesehen. Mittels der Kupplung und eines Klinkenfreilaufs läßt sich das Ladegebläse in zwei unterschiedliche Drehzahlstufen schalten, nämlich einem direkten Durchtrieb über den Klinkenfreilauf sowie eine übersetzte Stufe mit Antrieb des Planetenträgers bei feststehendem Hohlrad und Abtrieb über ein mit der Rotorwelle drehfest verbundenes Sonnenrad. Der bekannte mechanische Antrieb eines Ladegebläses eignet sich wegen der großen axialen Baulänge nicht zur Verwendung an einer Brennkraftmaschine, die in ein Kraftfahrzeug eingebaut ist. Da der Planetenträger gleichzeitig als Kupplungselement der Reibungskupplung dient, welches von einer Kupplungsbetätigung her über eine Druckplatte und Reibscheiben axial belastet wird, tritt sowohl in der Lagerung der Planetenräder als auch in der Verzahnung des Planetengetriebes Zwang auf, der die Laufruhe und Lebensdauer des Planetengetriebes negativ beeinflußt. Es läßt sich außerdem Unwucht an dem umlaufenden Planetenträger mit daran gelagerten Planetenrädern nicht vermeiden, wobei diese Wuchtungsfehler Schwingungen in der über ein Sonnenrad mit den Planetenrädern in Eingriff befindlichen Rotorwelle auslösen, die zur Zerstörung der Lagerung der Rotorwelle führen. Ein weiteres Problem besteht darin, daß bei umlaufendem Planetenträger einerseits ein erhöhter Aufwand erforderlich ist, Schmieröl in ausreichender Menge der Lagerung der Planetenräder zuzuführen, und daß andererseits durch die in der Lagerung auftretende Zentrifugalkraft Schmieröl in unerwünschter Weise abgeschleudert wird. Schließlich ist neben dem umlaufenden Nebenträger eine separate Stützwand zur Aufnahme der Lagerung der Rotorwelle erforderlich, wodurch sich der bauliche Aufwand und die Abmessungen der Antriebseinrichtung wesentlich erhöhen.

Der vorliegenden Erfindung liegt die Aufgabe zugrunde, die vorgenannten Nachteile zu vermeiden und einen mechanischen Antrieb eines Ladegebläses zu schaffen, an welchem die Abmessungen und der bauliche Aufwand zu verringern sind, während Bauteilüberlastungen im Planetengetriebe vermieden werden sollen.

Diese Aufgabe wird an einem mechanischen Antrieb eines Ladegebläses der vorgenannten Gattung dadurch gelöst, daß das Ladegebläse und das Planetengetriebe eine Baueinheit bilden, wobei ein Hohlrad des Planetengetriebes drehfest mit einer Eingangswelle verbunden ist und die ein-Sonnenrad aufnehmende Rotorwelle in einem Nabenteil eines Planetenträgers des Planetengetriebes gelagert ist. Die Planetenräder wirken somit als Puffer zwischen dem auf der Eingangswelle befestigten Hohlrad und dem stark drehzahlübersetzt angetriebenen Sonnenrad der Rotorwelle, so daß eine Schwingungsanregung der Rotorwelle von der Eingangswelle bzw. vom Planetengetriebe her vermieden wird. Aufgrund des Antriebs über das Hohlrad werden außerdem im Planetengetriebe Rundlauffehler in der Verzahnung gering gehalten. Der Planetenträger übernimmt in vorteilhafter Weise neben der Lagerung der Planetenräder gleichzeitig die Funktion der Lagerung der Rotorwelle als kompakte Baueinheit.

Weitere erfingungsgemäße Ausgestaltungen sind in den Unteransprüchen 2 bis 13 beschrieben. Die Planetenräder können ihre Funktion als schwingungsdämpfendes Glied zwischen der Eingangswelle und der Rotorwelle durch eine fliegende Lagerung ihrer im Planetenträger befestigten Lagerzapfen erfüllen, wobei die Rotorwelle nur im Planetenträger über zwei Schrägkugellager geführt ist. Durch die Ausbildung des Planetenträgers als Aluminiumteil kann das Gewicht des Lagerantriebs in vorteilhafter Weise reduziert werden. Wegen der unterschiedlichen Wärmedehnung des aus Aluminium hergestellten Planetenträgers und der Führungsbolzen aus Stahl ist vorgesehen, das Ende der Führungsbolzen, das in den Planetenträger eingesetzt ist, aufzuspreizen. Es besteht die Möglichkeit, den Führungsbolzen in dem entsprechenden Bereich einseitig anzusägen und den angesägten Teil mittels einer axial in den Führungsbolzen eingesetzter Schraube abzukippen. Auch können keilförmige Elemente am Ende des Führungsbolzens vorgesehen sein, die das Ende unter Zugspannung eines Spannmittel spreizen.

In weiterer Ausgestaltung der Erfindung kann der Planetenträger gleichzeitig eine Wandung des Ladergehäuses bilden, indem sich eine Wand radial vom Nabenteil nach außen erstreckt. Auf der einen Seite der Wand befindet sich dann das Untersetzungsgetriebe, und auf der anderen Seite das mit Ladeluft beaufschlagte Innere des Ladergehäuses. Dabei kann der Planetenträger über einen radial vorstehenden Steg mit einem Getriebegehäuse des Übersetzungsgetriebes und einem radialen Umfangsteil des Ladergehäuses verbunden sein. Auf diese Weise läßt sich der Planetenträger mit der in ihm gelagerten Rotorwelle und dem Rotor sowie den Teilen des Planetengetriebes, Sonnenrad und Planetenrädern als Baueinheit vormontieren, die anschließend in das Innere des Getriebegehäuses eingeführt und anschließend mit dem Getriebegehäuse und dem Verdichtergehäuse verbunden wird.

Von großem Vorteil ist bei der Montage der am Planetenträger befestigten Bauelemente im Getriebegehäuse eine besondere Führung des Planetenträgers gegenüber dem Getriebegehäuse, die einen exakten Einschub der Planetenräder in das Hohlrad ermöglicht. Zu diesem Zweck steht zur Wand des Planetenträgers ein Wandabschnitt im wesentlichen rechtwinklig vor, der während des Einschubs an der Innenfläche des Getriebegehäuses geführt ist. Eine stets gleichmäßige Schmierung und Ableitung der Wärme aus dem Planetengetriebe läßt sich durch besondere Entleerungsbohrungen erzielen, die radial am Hohlrad angeordnet sind. Aufgrund einer punktsymmetrischen Zentrierung des Ladergehäuses am Planetenträger läßt sich das Ladergehäuse um die Rotationsachse in bestimmte Lagen verstellen. In diesem Zusammenhang ist von besonderem Vorteil, wenn an besonderen Spannstegen des Getriebegehäuses die Stege des Planetenträger und ein flanschartig ausgebildeter Abschnitt des Ladergehäuse durch Spannpratzen befestigt sind. In diesem Fall kann der tangentiale Ladeluftstutzen des Ladergehäuses in jede beliebige Stellung eingestellt werden, so daß sich ein entsprechender Verbindungsschlauch zur Ladeluftleitung der Brennkraftmaschine günstig anordnen läßt.

Außerdem wird vorgeschlagen, die Wand des Planetenträgers als Ladeluftwärmetauscher auszubilden. Es besteht dabei die Möglichkeit, die im Inneren des Ladergehäuses auf die Wand auftreffende Ladeluft zu erwärmen oder zu kühlen. Als Wärmeaustauschmedium können Schmieröl oder die Kühlflüssigkeit der Brennkraftmaschine dienen, wobei gegebenenfalls separate Bohrungen in der Wand zur Führung des flüssigen Wärmeträgers nötig sind. Der Wärmeübergang von der Ladeluft her zum flüssigen Wärmeträger kann außerdem durch die Vevwendung von besonderen Rippen an der Wand oder durch die Anordnung von Wärmerohren verbessert werden.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung der Erfindung wird auf die Zeichnung verwiesen, in der zwei Ausführungsbeispiele vereinfacht dargestellt sind. Es zeigen

Fig. 1 einen Längsschnitt durch einen erfindungsgemäßen mechanischen Antrieb eines Ladegebläses und

Fig. 2 eine Seitenansicht einer aus Ladegebläse und mechanischem Antrieb bestehenden Einheit mit Teilschnitten im Bereich der Befestigung eines Ladergehäuses und eines Planetenträgers an einem Getriebegehäuse.

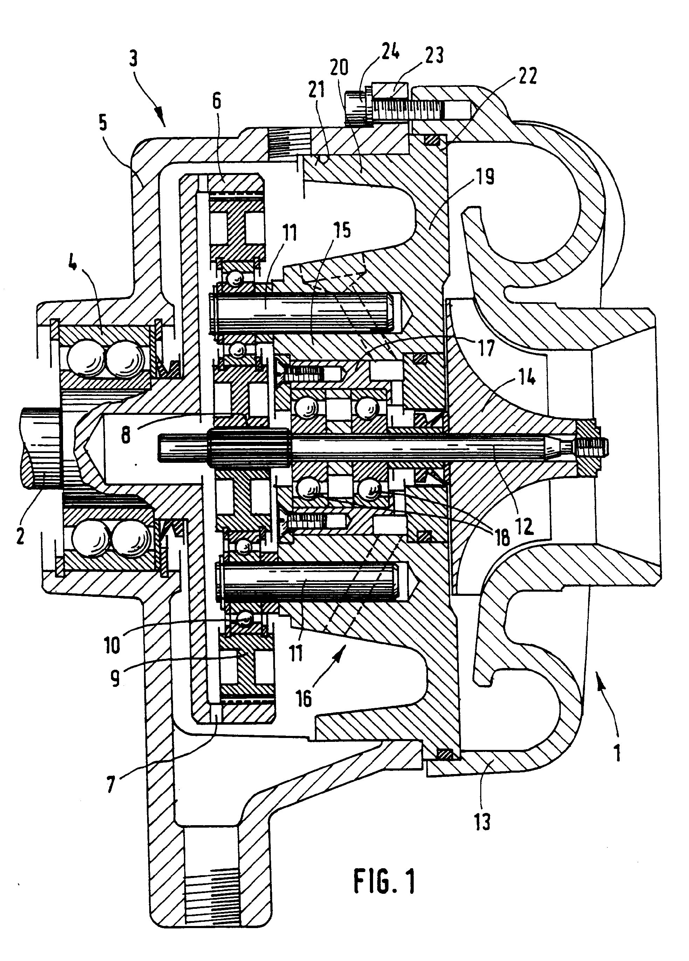

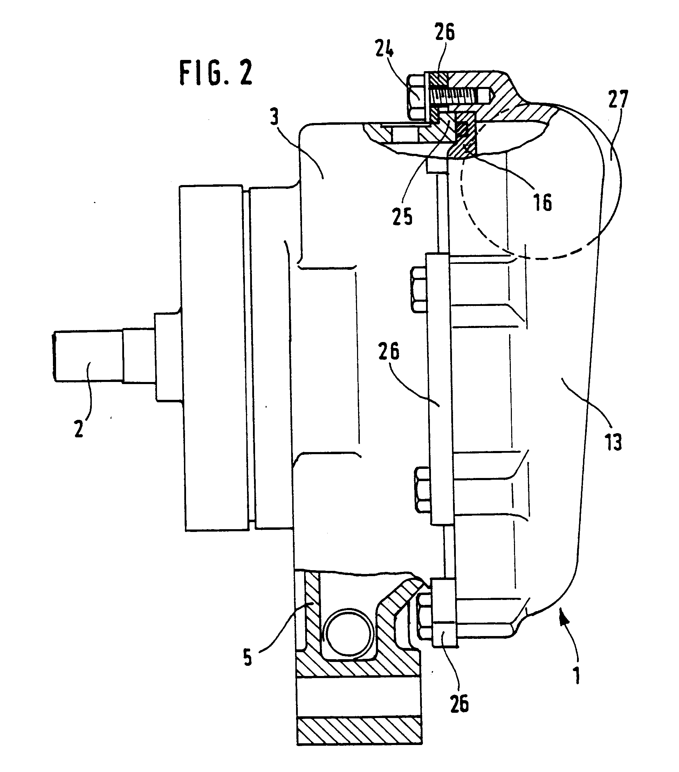

In den Fig. 1 und 2 ist, soweit dargestellt, mit 1 ein Ladegebläse für eine Brennkraftmaschine bezeichnet, das über eine Eingangswelle 2 und ein als Übersetzungsgetriebe dienendes Planetengetriebe 3 von der Brennkraftmaschine aus über nicht dargestelle Antriebselemente, wie z. B. Umschlingungs-, Zahnrad- oder Hydrostatgetriebe, antreibbar ist.

Gemäß der Fig. 1 ist die Eingangswelle 2 über ein doppelreihiges Kugellager 4 in einem Getriebegehäuse 5 des Planetengetriebes gelagert und drehfest mit einem Hohlrad 6 des Planetengetriebes 3 verbunden. Das Hohlrad 6 weist radiale Entleerungsbohrungen 7 auf, die gleichmäßig am Umfang des Hohlrades 6 verteilt sind und für eine gleichmäßige Durchströmung des Hohlrades mit Schmieröl sorgen sollen. In Eingriff mit dem Hohlrad 6 und einem Sonnenrad 8 befinden sich Planetenräder 9, die mittels Kugellager 10 auf Führungsbolzen 11 gelagert sind. Das Sonnenrad 8 ist drehfest verbunden mit einer Rotorwelle 12, die andererseits im Inneren eines Ladergehäuses 13 endet und einen zur Verdichtung angesaugter Luft dienenden Rotor 14 trägt. Die Führungsbolzen 11 sind in einem Nabenteil 15 eines Planetenträgers 16 befestigt. Dieser Planetenträger 16 nimmt über eine Buchse 17 zwei Schrägkugellager 18 auf, in denen die Rotorwelle 12 gelagert ist. Weiterhin weist der Planetenträger eine sich radial erstreckende Wand 19 auf, die als Trennung zwischen dem Inneren des Getriebegehäuses 5 gegenüber dem Inneren des Ladergehäuses 13 dient. Am Ende dieser Wand 19 ist ein sich im rechten Winkel zu ihr erstreckender Wandungsteil 20 vorgesehen, der an einer Innenfläche 21 des Getriebegehäuses geführt ist. Uber diesen Wandabschnitt 20 steht ein Steg 22 vor, der zwischen einem Flansch 23 des Getriebegehäuses 5 und dem Ladergehäuse 13 mittels Schrauben 24 verspannt ist.

Gemäß dem Ausgestaltungsbeispiel der Erfindung nach der Fig. 2 weist das Getriebegehäuse 5 zur Verspannung mit dem Ladergehäuse 13 und dem Planetenträger 16 anstelle eines Flansches einen Spannsteg 25 auf, an welchem Spannpratzen 26, die mit dem Ladergehäuse 13 über Schrauben 24 verbunden sind, angreifen, so daß eine Klemmverbindung zwischen dem Getriebegehäuse 5, dem Planetenträger 16 und dem Ladergehäuse 13 besteht. Nach dem Lösen der Schrauben 24 läßt sich das Ladergehäuse 13 zu dem Getriebegehäuse 5 sowie dem Planetenträger durch Verdrehen um die Rotationsachse verstellen, so daß ein tangentialer Ladeluftstutzen 27 in eine zum Anschluß an eine Brennkraftmaschine geeignete Stellung bringbar ist.

Bezugszeichen

1 Ladegebläse

2 Eingangswelle

3 Planetengetriebe

4 doppelreihiges Kugellager

5 Getriebegehäuse

6 Hohlrad

7 Entleerungsbohrungen

8 Sonnenrad

9 Planetenräder

10 Kugellager

11 Führungsbolzen

12 Rotorwelle

13 Ladergehäuse

14 Rotor

15 Nabenteil

16 Planetenträger

17 Buchse

18 Schrägkugellager

19 Wand

20 rechtwinkliger Wandabschnitt

21 Innenfläche von 5

22 Steg

23 Flansch

24 Schrauben

25 Spannsteg

26 Spannpratzen

27 tangentialer Ladeluftstutzen

**Patentansprüche**

1. Mechanischer Antrieb eines Ladegebläses (1) einer Brennkraftmaschine, wobei von der Brennkraftmaschine aus über ein als Planetengetriebe (3) ausgebildetes Übersetzungsgetriebe und eine Rotorwelle (12) ein in einem Ladergehäuse (13) angeordneter Rotor (14) antreibbar ist, dadurch **gekennzeichnet**, daß das Ladegebläse (1) und das Planetengetriebe (3) eine Baueinheit bilden, wobei ein Hohlrad (6) des Planetengetriebes (3) drehfest mit einer Eingangswelle (2) verbunden ist und die ein Sonnenrad (8) aufnehmende Rotorwelle (12) in einem Nabenteil (15) eines Planetenträgers (16) des Planetengetriebes (3) gelagert ist.

2. Mechanischer Antrieb eines Ladegebläses nach Anspruch 1, dadurch **gekennzeichnet**, daß die Planetenräder (9) über Führungsbolzen (11) am Planetenträger (16) fliegend gelagert sind.

3. Mechanischer Antrieb eines Ladegebläses nach einem der vorhergehenden Ansprüche, dadurch **gekennzeichnet**, daß der Planetenträger (16) aus Aluminium und die Führungsbolzen (11) aus Stahl hergestellt sind und daß das in den Planetenträger (16) eingesetzte Ende der Führungsbolzen (11) mechanisch aufspreizbar ist.

4. Mechanischer Antrieb eines Ladegebläses nach einem der vorhergehenden Ansprüche, dadurch **gekennzeichnet**, daß das in den Planetenträger (16) eingesetzte Ende der Führungsbolzen (11) als Dehnelement ausgebildet ist, das unter der Kraft eines Spannmittels radial ausformbar ist.

5. Mechanischer Antrieb eines Ladegebläses nach einem der vorhergehenden Ansprüche, dadurch **gekennzeichnet**, daß die Rotorwelle (12) in dem Nabenteil (15) des Planetenträgers (16) über zwei Schrägkugellager (18) gelagert ist.

6. Mechanischer Antrieb eines Ladegebläses nach einem der vorhergehenden Ansprüche, dadurch **gekennzeichnet**, daß eine sich vom Nabenteil (15) her radial erstreckende Wand (19) des Planetenträgers (16) eine Wandung eines Ladergehäuses (13) bildet.

7. Mechanischer Antrieb eines Ladegebläses nach einem der vorhergehenden Ansprüche, dadurch **gekennzeichnet**, daß der Planetenträger (16) über einen radial vorstehenden Steg (22) mit einem Getriebegehäuse (5) des Planetengetriebes (3) und einem radialen Umfangsteil des Ladergehäuses (13) verbunden ist.

8. Mechanisch angetriebenes Ladegebläse nach einem der vorhergehenden Ansprüche, dadurch **gekennzeichnet**, daß an der Wand (19) des Planetenträgers (16) im wesentlichen rechtwinklig zu ihr verlaufende Wandabschnitte (20) vorgesehen sind, die an einer Innenfläche (21) des Getriebegehäuses (5) geführt sind.

9. Mechanisch angetriebenes Ladegebläse nach einem der vorhergehenden Ansprüche, dadurch **gekennzeichnet**, daß das Hohlrad (6) radiale Entleerungsbohrungen (7) zur Ableitung von Schmieröl aufweist.

10. Mechanisch angetriebenes Ladegebläse nach einem der vorhergehenden Ansprüche, dadurch **gekennzeichnet**, daß das Ladergehäuse (13) am Planetenträger (16) punktsymmetrisch zur Rotationsachse des Rotors (14) zentriert ist.

11. Mechanisch angetriebenes Ladegebläse nach einem der vorhergehenden Ansprüche, dadurch **gekennzeichnet**, daß das einen tangentialen Ladeluftstutzen (27) aufweisende Ladergehäuse (13) mittels segmentartig ausgebildeter Spannpratzen (26) an Spannstegen (25 und 22) des Getriebegehäuses (5) und des Planetenträgers (16) um die Rotationsachse schwenkbar befestigt ist.

12. Mechanischer Antrieb eines Ladegebläses nach einem der vorhergehenden Ansprüche, dadurch **gekennzeichnet**, daß die Wand (19) des Planetenträgers (16) als Ladeluftwärmetauscher ausgebildet ist.

13. Mechanischer Antrieb eines Ladegebläses nach einem der vorhergehenden Ansprüche, dadurch **gekennzeichnet** , daß in der Wand (19) Bohrungen für einen flüssigen Wärmeträger vorgesehen sind.

## Claims

1. Mechanical drive of a supercharger (1) of an internal combustion engine, in which a rotor (14), which is arranged in a supercharger housing (13), can be driven from the internal combustion engine via a transmission gearing system, which is formed as a planet gearing system (3), and a rotor shaft (12), characterised in that the supercharger (1) and the planet gearing system (3) form a basic unit, a ring gear (6) of the planet gearing system (3) being non-rotatably connected to an input shaft (2), and the rotor shaft (12), which carries a sun wheel (8), being mounted in a hub part (15) of a planet carrier (16) of the planet gearing system (3).

2. Mechanical drive a supercharger according to claim 1, characterised in that the planet wheels (9) are mounted on the planet carrier (16) in a overhung manner via guide pins (11).

3. Mechanical drive of a supercharger according to either of the preceding claims, characterised in that the planet carrier (16) is produced from aluminium and the guide pins (11) from steel, and that the end of each of the guide pins (11) which is inserted in the planet carrier (16) is mechanically expandable.

4. Mechanical drive of a supercharger according to one of the preceding claims, characterised in that the end of each of the guide pins (11) which is inserted in the planet carrier (16) is formed as an expansion element which can be radially expanded under the force of a tension means.

5. Mechanical drive of a supercharger according to one of the preceding claims, characterised in that the rotor shaft (12) is mounted in the hub part (15) of the planet carrier (16) via two angular contact ball bearings (18).

6. Mechanical drive of a supercharger according to one of the preceding claims, characterised in that a wall (19), which extends radially from the hub part (15), of the planet carrier (16) forms a wall of a supercharger housing (13).

7. Mechanical drive of a supercharger according to one of the preceding claims, characterised in that the planet carrier (16) is connected via a radially projecting bar (22) to a gear case (5) of the planet gearing system (3) and a radial circumferential part of the supercharger housing (13).

8. Mechanically driven supercharger according to one of the preceding claims, characterised in that wall sections (20) are provided at the wall (19) of the planet carrier (16), which sections extend essentially at a right angle to the wall and are guided at an inner surface (21) of the gear case (5).

9. Mechanically driven supercharger according to one of the preceding claims, characterised in that the ring gear (6) comprises radial evacuation holes (7) to discharge lubricating oil.

10. Mechanically driven supercharger according to one of the preceding claims, characterised in that the supercharger housing (13) is centred on the planet carrier (16) so as to be radially symmetrical about the axis of rotation of the rotor (14).

11. Mechanically driven supercharger according to one of the preceding claims, characterised in that the supercharger housing (13), which comprises a tangential supercharger air connection piece (27), is secured by means of segmental clamping claws (26) to clamping bars (25 and 22) of the gear case (5) and the planet carrier (16) so as to be pivotable about the axis of rotation.

12. Mechanical drive of a supercharger according to one of the preceding claims, characterised in that the wall (19) of the planet carrier (16) is formed as a supercharger air heat exchanger.

13. Mechanical drive of a supercharger according to one of the preceding claims, characterised in that holes are provided in the wall (19) for a liquid heat transfer medium.

## Revendications

1. Entraînement mécanique d'un compresseur d'alimentation (1) d'un moteur à combustion, dans lequel un rotor (14) disposé dans un carter de compresseur (13) est susceptible d'être entraîné par le moteur au moyen d'un engrenage multiplicateur, formé par un engrenage planétaire (3), et d'un arbre de rotor (12), **caractérisé** en ce que le compresseur (1) et l'engrenage planétaire (3) forment un ensemble constructif dans lequel une couronne à denture intérieure (6) de l'engrenage planétaire (3) est solidaire en rotation d'un arbre d'entrée (2) et dans lequel l'arbre de rotor (12), portant un pignon planétaire (8), est porté par un palier monté dans une partie formant moyeu (15) d'un porte-satellites (16) de l'engrenage planétaire (3).

2. Entraînement selon la revendication 1, **caractérisé** en ce que les satellites (9) sont montés en porte-à-faux au moyen de goujons (11) sur le porte-satellites (16).

3. Entraînement selon l'une des revendications précédentes, **caractérisé** en ce que le porte-satellites (16) est réalisé en aluminium et les goujons (11) en acier, et en ce que l'extrémité des goujons (11), qui est engagée dans le porte-satellites (16) est capable de s'ouvrir.

4. Entraînement selon l'une des revendications précédentes, **caractérisé** en ce que l'extrémité des goujons (11) qui est engagée dans le porte-satellites (16) est formée par un élément à expansion susceptible d'être déformé radialement par la force d'un moyen de fixation.

5. Entraînement selon l'une des revendications précédentes, **caractérisé** en ce que l'arbre de rotor (12) est monté dans le moyeu (15) du porte-satellites (16) au moyen de deux roulements à billes obliques (18).

6. Entraînement selon l'une des revendications précédentes, **caractérisé** en ce qu'une paroi (19) du porte-satellites (16), s'étendant radialement à partir dudit moyeu (15), forme une paroi d'un carter de compresseur (13).

7. Entraînement selon l'une des revendications précédentes, **caractérisé** en ce que le porte-satellites (16) est raccordé par un rebord proéminent radialement (22) à un carter (5) de l'engrenage planétaire (3) et à une partie périphérique radiale du carter de compresseur (13).

8. Entraînement selon l'une des revendications précédentes, **caractérisé** en ce que, sur la paroi (19) du porte-satellites (16) et sensiblement perpendiculairement à celle-ci, il est prévu des segments de paroi (20) qui s'engagent contre une surface intérieure (21) du carter d'engrenage (5).

9. Entraînement selon l'une des revendications précédentes, **caractérisé** en ce que ladite couronne (6) comporte des trous radiaux de vidange (7) pour l'évacuation d'un lubrifiant.

10. Entraînement selon l'une des revendications précédentes, **caractérisé** en ce que le carter de compresseur (13) est centré sur le porte-satellites (16) suivant une symétrie centrale par rapport à l'axe de rotation du rotor (14).

11. Entraînement selon l'une des revendications précédentes, **caractérisé** en ce que le carter de compresseur (13), comportant une tubulure tangentielle (27) d'air d'alimentation, est fixé au moyen de griffes de serrage (26) formant des segments sur des rebords de fixation (25 et 22) du carter d'engrenage (5) et du porte-satellites (16) d'une manière inclinable par pivotement autour de l'axe de rotation.

12. Entraînement selon l'une des revendications précédentes, **caractérisé** en ce que la paroi (19) du porte-satellites (16) est agencée en échangeur de chaleur pour l'air d'alimentation.

13. Entraînement selon l'une des revendications précédentes, **caractérisé** en ce que des conduits pour un liquide caloporteur sont prévus dans la paroi (19).

FIG. 1

# FIG. 2